# EUROPÄISCHE PATENTSCHRIFT

(11) **EP 2 799 272 B1**
(45) Veröffentlichungstag und Bekanntmachung des Hinweises auf die Patenterteilung: **19.06.2019**
(21) Anmeldenummer: 13005529.6
(22) Anmeldetag: 28.11.2013
(51) Int. Cl.: B60K 11/06, B60K 11/04, B60K 11/08

(54) **Fahrerhaus mit rückseitigem Flächenkühler**
Driver's cab with rear flat cooler
Cabine de conducteur doté d'un refroidisseur de surface arrière

(30) Priorität: 30.04.2013 DE 102013007464
(43) Veröffentlichungstag der Anmeldung: 05.11.2014
(73) Patentinhaber: MAN Truck & Bus AG, 80995 München (DE)
(72) Erfinder: Gutzeit, Reinhard, 82049 Pullach (DE)
(74) Vertreter: v. Bezold & Partner Patentanwälte - PartG mbB

(56) Entgegenhaltungen:
- EP-A2- 1 544 020
- GB-A- 1 338 300
- GB-A- 2 060 523
- US-A- 3 715 001
- US-A- 3 827 523
- US-A- 3 929 202

## Beschreibung

Die Erfindung betrifft ein Fahrerhaus für einen Lastkraftwagen, insbesondere für eine Sattelzugmaschine.

Aus der gattungsgemäßen EP 1 544 020 A2, und aus der GB 1 338 300 A, GB 2 060 523 A, US 3 715 001 A, US 3 929 202 A und US 3 827 523 A sind allgemein Fahrzeuge bekannt, die insbesondere mit Kühleinrichtungen hinter einem Fahrerhaus ausgestattet sind. Aus dem Stand der Technik, z. B. der US 2006/0095178 A1, sind ferner Fahrerhäuser für Lastkraftwägen, insbesondere Sattelzugmaschinen bekannt, die an der Frontseite mehrere Lufteinlässe zur Motor- und/oder Aggregatskühlung aufweisen. Die Lufteinlässe und die damit verbundene Luftdurchströmung der Fahrerhäuser führen zu einem erhöhten Luftwiderstand, insbesondere zu einem erhöhten Luftwiderstandsbeiwert (cw-Wert), was in der Folge zu einem erhöhten Kraftstoffverbrauch führt.

Eine Aufgabe der Erfindung ist es, ein verbessertes und/oder alternatives Fahrerhaus für einen Lastkraftwagen, insbesondere eine Sattelzugmaschine, zu schaffen.

Diese Aufgabe kann mit den Merkmalen des Hauptanspruchs gelöst werden. Vorteilhafte Weiterbildungen der Erfindung können den Unteransprüchen und der folgenden Beschreibung entnommen werden.

Die Erfindung schafft ein Fahrerhaus für einen Lastkraftwagen, vorzugsweise für eine Sattelzugmaschine. Das zweckmäßig geschlossene Fahrerhaus weist unter anderem in Bezug auf die Fahrzeuglängsachse eine Frontseite und eine Rückseite auf. Das Fahrerhaus zeichnet sich insbesondere dadurch aus, dass zumindest eine Motor- und/oder Aggregatskühleinrichtung, z. B. für ein oder mehrere zirkulierende Medien einer oder mehrerer Systemeinheiten, an der Rückseite des Fahrerhauses angeordnet ist.

Es ist möglich, dass die Frontseite so geschlossenflächig ausgeführt ist, dass sie keinen Lufteinlass zur Motor- und/oder Aggregatskühlung aufweist. Die Frontseite des Fahrerhauses ist somit zweckmäßig so ausgeführt, dass eine Null-Durchströmung (Umströmung) durch selbige stattfindet.

Die Motor- und /oder Aggregatskühleinrichtung ist vorzugsweise als Flächenkühler ausgeführt und kann sich zweckmäßig über einen Großteil der Rückseite des Fahrerhauses erstrecken, z. B. über mehr als 60%, 70%, 80% oder sogar mehr als 90% davon.

Die Motor- und/oder Aggregatskühleinrichtung kann als Turbulenz- und/oder Konvektionskühler ausgeführt sein und alternativ oder ergänzend z. B. einen Zwangs-Kühler umfassen, vorzugsweise einen luftdurchströmbaren und/oder eine elektrische Lüftungseinheit umfassenden Zwangs-Kühler.

Die Motor- und/oder Aggregatskühleinrichtung der Erfindung ist so an der Rückseite des Fahrerhauses angeordnet, dass sie quasi nur indirekt von Fahrtwind anströmbar ist. Die zur Wärmeabfuhr vorgesehenen, nachfolgend näher beschriebenen Kühllamellen und insbesondere deren Nachbarabstände sind somit zweckmäßig für eine deutlich geringere an- und abströmende Windgeschwindigkeit als auch auf ein deutlich geringeres Luftaustauschvolumen hin ausgelegt.

Die Motor- und/oder Aggregatskühleinrichtung weist eine Vielzahl Kühllamellen, z. B. Kühlbleche auf. Die Kühllamellen dienen zweckmäßig der Wärmeabfuhr und sind vorzugsweise von einem oder mehreren Kühlkreisläufen, z. B. Rohrleitungen, in denen das zu kühlende Medium zirkuliert, durchdrungen und/oder umgeben.

Die Kühllamellen erstrecken sich vorzugsweise in vertikaler Richtung und sind zweckmäßig so nebeneinander angeordnet und ausgeführt, dass sich aufgrund des Nachbarabstandes, der Lamellendicke und der Lamellenform die bestmögliche Wärmeabfuhr unter allen Betriebsbedingungen des Fahrzeugs ergibt. Es sind allerdings auch Ausführungsformen möglich, bei denen sich die Kühllamellen horizontal oder sogar schräg erstrecken können, z. B. mit zumindest einer senkrecht oder schräg verlaufenden Rohrleitung.

Erfindungsmäßig weisen die Kühllamellen eine unterschiedliche Tiefe auf, z. B. seitlich äußere Kühllamellen breiter sind als innen liegende Kühllamellen. Dadurch kann ermöglicht werden, dass die Rückseite der Motor- und/oder Aggregatskühleinrichtung eine quasi-konkave Form beschreibt. Die quasi-konkave Form folgt zweckmäßig einer Schwenklinie eines an den Lastkraftwagen ankoppelbaren Auflieger-Anhängers. Dadurch kann der Raum zwischen der Rückseite des Fahrerhauses und der Frontseite des Auflieger-Anhängers, der üblicherweise meist einen mehr oder weniger ungenutzten Raum darstellt, als Bauraum für die Motor- und/oder Aggregatskühleinrichtung quasi optimal genutzt werden.

Es ist möglich, dass die Rückseite der Motor- und/oder Aggregatskühleinrichtung, insbesondere die Rückseite der Kühllamellen, quasi-konkav ausgebildet ist. Alternativ oder ergänzend kann die Vorderseite der Motor- und/oder Aggregatskühleinrichtung eben ausgeführt sein. So ist es z. B. möglich, dass die Motor- und/oder Aggregatskühleinrichtung, insbesondere die Kühllamellen, eine quasi-plan-konkave Form beschreibt.

Das Fahrerhaus ist vorzugsweise Teil einer Sattelzugmaschine und die Motor- und/oder Aggregatskühleinrichtung ist in einem Bauraum angeordnet, der in der Fahrzeuglängsachse durch die Rückseite des Fahrerhauses und eine Schwenklinie einer Frontseite eines an die Sattelzugmaschine ankoppelbaren Auflieger-Anhängers definiert wird.

Es ist möglich, dass vorzugsweise seitlich benachbart zu der Motor- und/oder Aggregatskühleinrichtung Windleitelemente, z. B. Seiten-Klappen angeordnet sind, die zweckmäßig einer besseren aerodynamischen seitlichen Abströmung vom Fahrerhaus zum Auflieger-Anhänger hin dienen. Alternativ oder ergänzend können ein oder mehrere Klappen, Spoiler und/oder Luftleitelemente (z. B. Deflektoren) vorgesehen werden, um insbesondere die Luftdurch- und/oder Luftanströmung der Kühllamellen zu verbessern, z. B. Turbulenzen zu verringern.

Die Motor- und/oder Aggregatskühleinrichtung kann zumindest einen oder vorzugsweise zumindest zwei Kühlkreisläufe aufweisen, vorzugsweise für zwei unterschiedliche Kühlmedien, z. B. Kühlflüssigkeiten.

Es ist möglich, dass die Motor- und/oder Aggregatskühleinrichtung hinter der Rückseite des Fahrerhauses angeordnet ist und vorzugsweise über eine Tragkonstruktion an der Rückseite des Fahrerhauses montiert ist.

Es ist möglich, dass die Oberseite des Fahrerhauses vorzugsweise zur Rückseite des Fahrerhauses hin oder in Fahrzeuglängsrichtung nach hinten ansteigend ausgeführt ist und/oder mit einem Dach-Spoiler versehen ist, wodurch zusätzlicher, normalerweise mehr oder weniger nicht genutzter Raum entsteht. Im Rahmen der Erfindung ist es möglich, dass der Raum, der durch den Dach-Spoiler erzeugt wird und/oder dadurch erzeugt wird, dass die Oberseite des Fahrerhauses ansteigend ausgeführt ist, durch die Motor- und/oder Aggregatskühleinrichtung genutzt wird.

Die Rückseite des Fahrerhauses kann mit einer Wärmeisolierung versehen werden, z. B. um den Fahrerhaus-Innenraum von der Motor- und/oder Aggregatskühleinrichtung zweckmäßig thermisch entkoppeln zu können.

Das Fahrerhaus kann zudem einen Stauraum (z. B. einen Kofferraum für den Fahrer) aufweisen, der sich insbesondere aus dem Entfall der üblicherweise frontseitig angeordneten Kühler ergibt und der über einen Teil der Frontseite des Fahrerhauses zugänglich ist.

Zu erwähnen ist, dass die Motorkühleinrichtung zweckmäßig zum Kühlen eines Motors zum Antreiben des Lastkraftwagens ausgeführt ist und/oder die Aggregatskühleinrichtung zweckmäßig zum Kühlen eines Lastkraftwagen-Aggregats ausgeführt ist.

Zu erwähnen ist außerdem, dass die oben erwähnte Schwenklinie und/oder der oben erwähnte Bauraum dynamisch sind, weil sie sich z. B. mittels einer Kurvenfahrt verändern, weil das Fahrerhaus üblicherweise gefedert ist und/oder der Auflieger-Anhänger üblicherweise Kipp- oder Nickbewegungen ausführt (z. B. wegen Fahrbahnradien/-Mikro-Topografie, etwa Buckel, Kuppe, Senke, etc.).

Zu erwähnen ist ferner, dass die Frontseite des Fahrerhauses z. B. zumindest teilweise aus Kunststoff, Verbundwerkstoff und/oder Metall (z. B. Blech) ausgeführt sein kann.

Zu erwähnen ist des Weiteren, dass die Frontseite vorzugsweise kühlergrillfrei und/oder gleichmäßig und somit zweckmäßig aerodynamisch ausgebildet ist.

Zu erwähnen ist noch, dass sich die Frontseite und die Rückseite des Fahrerhauses auf die Fahrzeuglängsachse beziehen.

Die Erfindung ist nicht auf ein Fahrerhaus beschränkt, sondern umfasst auch einen Lastkraftwagen, vorzugsweise eine Sattelzugmaschine, mit einem Fahrerhaus wie hierin beschrieben.

Die oben beschriebenen Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Fig. 1: zeigt eine schematische Ansicht eines Fahrerhauses von oben gemäß einer Ausführungsform der Erfindung,
- Fig. 2: zeigt eine Ansicht des Fahrerhauses aus Fig. 1 von hinten,
- Fig. 3: zeigt eine perspektivische Ansicht eines Fahrerhauses gemäß einer Ausführungsform der Erfindung, und
- Fig. 4: zeigt eine Seitenansicht eines Fahrerhauses gemäß einer wiederum anderen Ausführungsform der Erfindung.

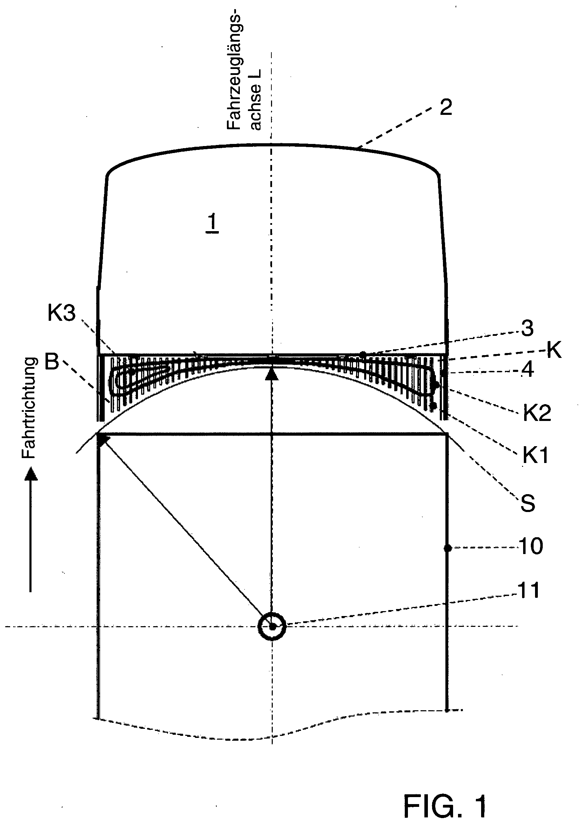

Figur 1 zeigt eine schematische Draufsicht auf ein Fahrerhaus 1 einer Sattelzugmaschine mit angekoppeltem Auflieger-Anhänger 10. Der Auflieger-Anhänger 10 ist auf übliche Weise über eine Sattelplattenkonstruktion schwenkbar an die Sattelzugmaschine gekoppelt. Durch Aufnahme des Königszapfens des Auflieger-Anhängers 10 in die Verschlussteile der Sattelplatte ergibt sich auf übliche Weise eine Drehachse 11.

Die Sattelzugmaschine weist benachbart zu dem Fahrerhaus 1 einen nicht gezeigten Motor zum Antreiben der Sattelzugmaschine und eine oder mehrere nicht gezeigte Fahrzeug-Aggregate auf. Das Fahrerhaus 1 umfasst in der Lastkraftwagenlängsachse oder allgemein der Fahrzeuglängsachse L eine Frontseite 2 und eine Rückseite 3.

Das Fahrerhaus 1 weist an seiner Rückseite 3 zumindest eine Motor- und Aggregatskühleinrichtung K auf, die dazu dient, den Motor insbesondere beim Antreiben der Sattelzugmaschine und die Fahrzeug-Aggregate zu kühlen.

Die Frontseite 3 des Fahrerhauses 1 ist konstruktiv, bauartbedingt geschlossenflächig ausgeführt, so dass sie keinen Lufteinlass zur Motor- und Aggregatskühlung aufweist und insoweit eine luftundurchströmte Fahrerhaus-Frontseite darstellt. Das ist insbesondere dadurch möglich, weil die Motor- und Aggregatskühleinrichtung K an der Rückseite 3 des Fahrerhauses 1 positioniert ist.

Die Motor- und Aggregatskühleinrichtung K ist in einem Bauraum B angeordnet, der in der Fahrzeuglängsachse L durch die Rückseite 3 des Fahrerhauses 1 und eine Schwenklinie S einer Frontseite des Auflieger-Anhängers 10 definiert wird. Der Bauraum B ist quasi dynamisch, weil er sich während einer Fahrt verändert, z. B. wegen Federbewegungen des Fahrerhauses 1, Nick- oder Kippbewegungen des Auflieger-Anhängers 10, einer Kurvenfahrt, etc..

Die Motor- und Aggregatskühleinrichtung K kann seitlich benachbart Luftleitelemente 4, insbesondere Seitenklappen aufweisen. Diese dienen primär einer besseren aerodynamischen seitlichen Abströmung vom Fahrerhaus 1 zum Auflieger-Anhänger 10 hin und definieren auf quasi natürliche Weise die seitliche Begrenzung des Bauraums B.

Die Motor- und Aggregatskühleinrichtung K ist als Flächenkühler ausgeführt und umfasst eine Vielzahl sich vertikal erstreckender, nebeneinander positionierter Kühllamellen K1 und zumindest einen vorzugsweise zumindest zwei Kühlkreisläufe K2 und K3 (Motorkühlkreislauf, Ladeluftkühlkreis) oder weitere Kühlkreisläufe (z. B. Kühlung verdichteter Luft, Kühlung von Ölkreisläufen, etc).

Seitlich außenliegende Kühllamellen K1 sind breiter ausgebildet als innenliegende Kühllamellen K1, so dass die Rückseite der Kühllamellen K1 oder allgemein die Rückseite der Motor- und Aggregatskühleinrichtung K eine quasi-konkave Form bildet. Die quasi-konkave Form folgt der Schwenklinie S. Dadurch kann gewährleistet werden, dass der Bauraum B, der durch die Schwenklinie S und die Rückseite 3 des Fahrerhauses 1 definiert wird, durch die Motor- und Aggregatskühleinrichtung K quasi optimal genutzt werden kann. Die Vorderseite der Motor- und Aggregatskühleinrichtung K ist zweckmäßig eben ausgeführt. Bei Betrachtung von oben beschreibt die Motor- und Aggregatskühleinrichtung K folglich eine quasi-plan-konkave Form.

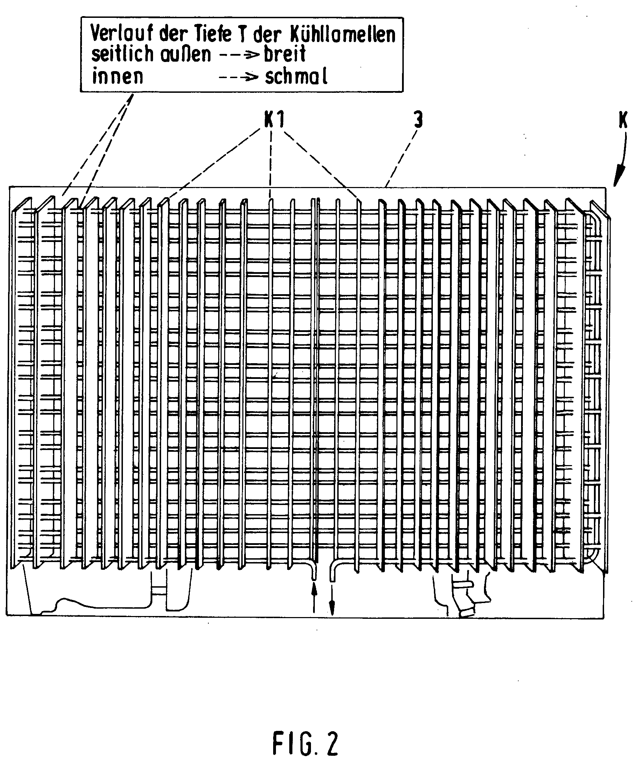

Figur 2 zeigt eine Ansicht der Motor- und Aggregatskühleinrichtung K aus Figur 1 von hinten. Aus Figur 2 wird ersichtlich, dass die Motor- und Aggregatskühleinrichtung K als Flächenkühler ausgeführt ist und sich über vorzugsweise zumindest nahezu die gesamte Fläche der Rückseite 3 des Fahrerhauses 1 erstreckt.

Figur 2 ist ferner der Verlauf der Tiefe T der Kühllamellen K1 zu entnehmen. Die Motor- und Aggregatskühleinrichtung K ist als Turbulenz- und Konvektionskühler ausgeführt und kann optional einen vorzugsweise luftdurchströmbaren, z. B. eine elektrische Lüftungseinheit aufweisenden Zwangs-Kühler umfassen.

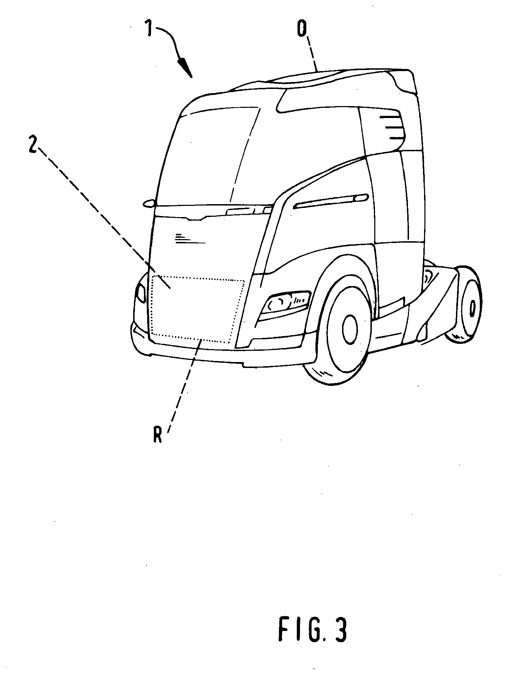

Figur 3 zeigt eine perspektivische Ansicht eines Fahrerhauses 1 gemäß einer Ausführungsform der Erfindung. In Figur 3 kann insbesondere die geschlossenflächig ausgeführte, keinen Lufteinlass zur Motor- und Aggregatskühlung aufweisende Fahrerhaus-Frontseite 2 gesehen werden. Die Frontseite 2 ist gleichmäßig, insbesondere kühlergrillfrei und somit aerodynamisch günstig ausgeführt. Das Fahrerhaus 1 weist einen schematisch angedeuteten Stauraum R auf, der über einen Teil der Frontseite 2 des Fahrerhauses 1 zugänglich ist. Die Oberseite O des Fahrerhauses 1 ist zur Rückseite 3 des Fahrerhauses 1 hin ansteigend ausgeführt, wodurch ein zusätzlicher Raum entsteht. Im Rahmen der Erfindung ist es möglich, dass die Motor- und Aggregatskühleinrichtung K zumindest teilweise in letztgenanntem Raum angeordnet ist.

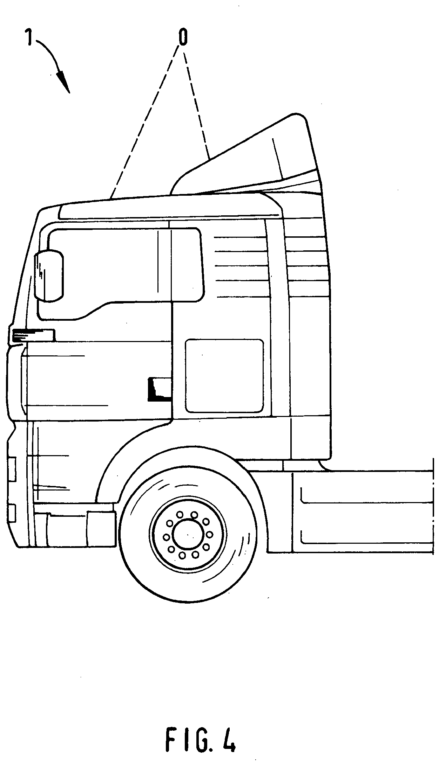

Figur 4 zeigt eine Seitenansicht eines Fahrerhauses 1 gemäß einer wiederum anderen Ausführungsform der Erfindung. Das hintere Ende des Fahrerhausdaches oder allgemein der Oberseite O des Fahrerhauses 1 ist insbesondere aus aerodynamischen Gründen so ausgeformt, dass ein weiterer, üblicherweise ungenutzter Raum durch die Volumenform mit Begrenzung hin zum für den Fahrer verfügbaren Arbeits- und Wohnraum des Fahrerhauses 1 entsteht. Dieser Raum ist ebenso bei niedrigeren Fahrerhäusern in Verbindung mit einem Dachspoiler gegeben. Ist ein solcher Raum vorhanden, wie z. B. in Figur 4 gezeigt, besteht die Möglichkeit, diesen zumindest teilweise für die Weiterführung oder Ergänzung der Motor- und Aggregatskühleinrichtung K zu nutzen.

Die Frontseite 2 des Fahrerhauses 1 kann teilweise aus Kunststoff, teilweise aus Metall und/oder teilweise aus einem Verbundwerkstoff gefertigt sein. Es sind ebenso Ausführungsformen möglich, in denen die Frontseite 2 des Fahrerhauses 1 nur aus Kunststoff oder nur aus Metall oder nur aus einem Verbundwerkstoff gefertigt ist.

## Patentansprüche

1. Fahrerhaus (1) für einen Lastkraftwagen, vorzugsweise eine Sattelzugmaschine, mit:
- einer Frontseite (2), und
- einer Rückseite (3),
- wobei zumindest eine Motor- und/oder Aggregatskühleinrichtung (K) an der Rückseite (3) des Fahrerhauses (1) angeordnet ist,
**dadurch gekennzeichnet, dass**
- die Motor- und/oder Aggregatskühleinrichtung (K) eine Vielzahl sich vertikal oder horizontal erstreckender Kühllamellen (K1) aufweist und die Kühllamellen (K1) eine unterschiedliche Tiefe (T) aufweisen.

2. Fahrerhaus (1) nach Anspruch 1, **dadurch gekennzeichnet, dass** die Frontseite (2) des Fahrerhauses (1) konstruktiv so geschlossenflächig ausgeführt ist, dass sie keinen Lufteinlass zur Motor- und/oder Aggregatskühlung aufweist.

3. Fahrerhaus (1) nach Anspruch 1 oder 2, **dadurch gekennzeichnet, dass** die Motor- und/oder Aggregatskühleinrichtung (K) als Flächenkühler ausgeführt ist.

4. Fahrerhaus (1) nach Anspruch 3 , **dadurch gekennzeichnet, dass** der Flächenkühler sich über zumindest 60% der Rückseite (3) des Fahrerhauses (1) erstreckt.

5. Fahrerhaus (1) nach einem der vorhergehenden Ansprüche, **dadurch gekennzeichnet, dass** die Motor- und/oder Aggregatskühleinrichtung (K) als Turbulenz- und/oder Konvektionskühler ausgeführt ist.

6. Fahrerhaus (1) nach einem der vorhergehenden Ansprüche, **dadurch gekennzeichnet, dass** die Motor- und/oder Aggregatskühleinrichtung (K) so an der Rückseite (3) des Fahrerhauses (1) angeordnet ist, dass diese nur indirekt von Fahrtwind anströmbar ist.

7. Fahrerhaus (1) nach einem der vorhergehenden Ansprüche, **dadurch gekennzeichnet, dass** die Motor- und/oder Aggregatskühleinrichtung (K) einen Zwangs-Kühler aufweist, vorzugsweise einen luftdurchströmbaren, insbesondere einen eine elektrische Lüftungseinheit umfassenden Zwangs-Kühler.

8. Fahrerhaus (1) nach einem der vorhergehenden Ansprüche, **dadurch gekennzeichnet, dass** die Kühllamellen (K1) eine unterschiedliche Tiefe (T) aufweisen, um die Rückseite der Motor- und/oder Aggregatskühleinrichtung (K) quasi-konkav zu gestalten.

9. Fahrerhaus (1) nach einem der vorhergehenden Ansprüche, **dadurch gekennzeichnet, dass** die Rückseite der Motor- und/oder Aggregatskühleinrichtung (K) quasi-konkav ausgeführt ist und/oder seitlich außenliegende Kühllamellen (K1) breiter ausgebildet sind als innenliegende Kühllamellen (K2).

10. Fahrerhaus (1) nach einem der vorhergehenden Ansprüche, **dadurch gekennzeichnet, dass** das Fahrerhaus (1) Teil einer Sattelzugmaschine ist und die Motor- und/oder Aggregatskühleinrichtung (K) in einem Bauraum (B) angeordnet ist, der in der Fahrzeuglängsachse (L) durch die Rückseite (3) des Fahrerhauses (1) und einer Schwenklinie (S) einer Frontseite eines an die Sattelzugmaschine ankoppelbaren Auflieger-Anhängers (10) definiert wird.

11. Fahrerhaus (1) nach einem der vorhergehenden Ansprüche, **dadurch gekennzeichnet, dass** vorzugsweise seitlich benachbart zu der Motor- und/oder Aggregatskühleinrichtung (K) Windleitelemente (4), vorzugsweise Seiten-Klappen, angeordnet sind.

12. Fahrerhaus (1) nach einem der vorhergehenden Ansprüche, **dadurch gekennzeichnet, dass** die Motor- und/oder Aggregatskühleinrichtung (K) zumindest einen oder zumindest zwei Kühlkreisläufe (K2, K3) aufweist.

13. Fahrerhaus (1) nach einem der vorhergehenden Ansprüche, **dadurch gekennzeichnet, dass** die Motor- und/oder Aggregatskühleinrichtung (K) hinter der Rückseite (3) des Fahrerhauses (1) angeordnet ist und vorzugsweise an der Rückseite (3) des Fahrerhauses (1) montiert ist.

14. Fahrerhaus (1) nach einem der vorhergehenden Ansprüche, **dadurch gekennzeichnet, dass** die Oberseite (O) des Fahrerhauses (1) ansteigend ausgeführt ist und/oder mit einem Dach-Spoiler versehen ist und dadurch zusätzlicher Raum entsteht, der durch die Motor- und/oder Aggregatskühleinrichtung (K) genutzt wird.

15. Fahrerhaus (1) nach einem der vorhergehenden Ansprüche, **dadurch gekennzeichnet, dass** die Rückseite (3) des Fahrerhauses (1) mit einer Wärmeisolierung versehen ist, um den Fahrerhaus-Innenraum von der Motor- und/oder Aggregatskühleinrichtung (K) thermisch zu entkoppeln.

16. Fahrerhaus (1) nach einem der vorhergehenden Ansprüche, **dadurch gekennzeichnet, dass** das Fahrerhaus (1) einen Stauraum aufweist, der über einen Teil der Frontseite (2) des Fahrerhauses (1) zugänglich ist.

17. Lastkraftwagen, vorzugsweise Sattelzugmaschine, mit einem Fahrerhaus (1) nach einem der vorhergehenden Ansprüche.

## Claims

1. Cab (1) for a lorry, preferably a semitrailer tractor, having:
- a front side (2), and
- a rear side (3),
- wherein at least one engine and/or assembly cooling device (K) is/are arranged on the rear side (3) of the cab (1),
**characterized in that**
- the engine and/or assembly cooling device (K) has a multiplicity of vertically or horizontally extending cooling fins (K1) and the cooling fins (K1) have different depths (T).

2. Cab (1) according to Claim 1, **characterized in that** the front side (2) of the cab (1) is embodied with such a continuous surface structure that it does not have an air inlet for engine and/or assembly cooling.

3. Cab (1) according to Claim 1 or 2, **characterized in that** the engine and/or assembly cooling device (K) is embodied as an extended-area cooler.

4. Cab (1) according to Claim 3, **characterized in that** the extended-area cooler extends over at least 60% of the rear side (3) of the cab (1).

5. Cab (1) according to one of the preceding claims, **characterized in that** the engine and/or assembly cooling device (K) is embodied as a turbulence and/or convection cooler.

6. Cab (1) according to one of the preceding claims, **characterized in that** the engine and/or assembly cooling device (K) is arranged on the rear side (3) of the cab (1) in such a way that the relative wind can impinge on said rear side only indirectly.

7. Cab (1) according to one of the preceding claims, **characterized in that** the engine and/or assembly cooling device (K) has a forced cooler, preferably a forced cooler through which air can flow, in particular a forced cooler comprising an electric ventilation unit.

8. Cab (1) according to one of the preceding claims, **characterized in that** the cooling fins (K1) have different depths (T) in order to make the rear side of the engine and/or assembly cooling device (K) quasi-concave.

9. Cab (1) according to one of the preceding claims, **characterized in that** the rear side of the engine and/or assembly cooling device (K) is embodied so as to be quasi-concave and/or cooling fins (K1) that are situated laterally on the outside are of wider design than cooling fins (K2) situated on the inside.

10. Cab (1) according to one of the preceding claims, **characterized in that** the cab (1) is part of a semitrailer tractor, and the engine and/or assembly cooling device (K) is arranged in an installation space (B) which is defined on the vehicle longitudinal axis (L) by the rear side (3) of the cab (1) and a pivoting line (S) of a front side of a semitrailer (10) that can be coupled to the semitrailer tractor.

11. Cab (1) according to one of the preceding claims, **characterized in that** wind-guiding elements (4), preferably side flaps, are arranged adjacent, preferably laterally adjacent, to the engine and/or assembly cooling device (K).

12. Cab (1) according to one of the preceding claims, **characterized in that** the engine and/or assembly cooling device (K) has at least one or at least two cooling circuits (K2, K3).

13. Cab (1) according to one of the preceding claims, **characterized in that** the engine and/or assembly cooling device (K) is arranged behind the rear side (3) of the cab (1) and is preferably mounted on the rear side (3) of the cab (1).

14. Cab (1) according to one of the preceding claims, **characterized in that** the upper side (0) of the cab (1) is embodied so as to rise, and/or is provided with a roof spoiler, and **in that** additional space, which is used by the engine and/or assembly cooling device (K), is thereby created.

15. Cab (1) according to one of the preceding claims, **characterized in that** the rear side (3) of the cab (1) is provided with thermal insulation in order to decouple the cab interior thermally from the engine and/or assembly cooling device (K).

16. Cab (1) according to one of the preceding claims, **characterized in that** the cab (1) has a storage space which is accessible via part of the front side (2) of the cab (1).

17. Lorry, preferably semitrailer tractor, having a cab (1) according to one of the preceding claims.

## Revendications

1. Cabine de conducteur (1) pour un poids lourd, de préférence un tracteur de semi-remorque, comprenant :
- un côté avant (2) et
- un côté arrière (3),
- dans laquelle au moins un dispositif de refroidissement de moteur et/ou de groupe (K) est disposé sur le côté arrière (3) de la cabine de conducteur (1),
**caractérisée en ce que**
- le dispositif de refroidissement de moteur et/ou de groupe (K) comprend une pluralité de lamelles de refroidissement (K1) s'étendant verticalement ou horizontalement et les lamelles de refroidissement (K1) présentent une profondeur différente (T).

2. Cabine de conducteur (1) selon la revendication 1, **caractérisée en ce que** le côté avant (2) de la cabine de conducteur (1) est réalisé de manière à présenter une structure à surface fermée de telle sorte qu'il ne présente aucune admission d'air pour le refroidissement de moteur et/ou de groupe.

3. Cabine de conducteur (1) selon la revendication 1 ou 2, **caractérisée en ce que** le dispositif de refroidissement de moteur et/ou de groupe (K) est réalisé sous forme de refroidisseur à surface étendue.

4. Cabine de conducteur (1) selon la revendication 3, **caractérisée en ce que** le refroidisseur à surface étendue s'étend sur au moins 60 % du côté arrière (3) de la cabine de conducteur (1).

5. Cabine de conducteur (1) selon l'une des revendications précédentes, **caractérisée en ce que** le dispositif de refroidissement de moteur et/ou de groupe (K) est réalisé sous forme de refroidisseur à turbulence et/ou à convection.

6. Cabine de conducteur (1) selon l'une des revendications précédentes, **caractérisée en ce que** le dispositif de refroidissement de moteur et/ou de groupe (K) est disposé sur le côté arrière (3) de la cabine de conducteur (1) de telle sorte que le vent de marche ne puisse s'écouler qu'indirectement sur celui-ci.

7. Cabine de conducteur (1) selon l'une des revendications précédentes, **caractérisée en ce que** le dispositif de refroidissement de moteur et/ou de groupe (K) comprend un refroidisseur à refroidissement forcé, de préférence un refroidisseur à refroidissement forcé pouvant être traversé par de l'air, en particulier comportant une unité de ventilation électrique.

8. Cabine de conducteur (1) selon l'une des revendications précédentes, **caractérisée en ce que** les lamelles de refroidissement (K1) présentent une profondeur différente (T) afin de configurer le côté arrière du dispositif de refroidissement de moteur et/ou de groupe (K) de manière quasi-concave.

9. Cabine de conducteur (1) selon l'une des revendications précédentes, **caractérisée en ce que** le côté arrière du dispositif de refroidissement de moteur et/ou de groupe (K) est réalisé de manière quasi-concave et/ou des lamelles de refroidissement (K1) situées à l'extérieur latéralement sont réalisées de manière plus large que des lamelles de refroidissement (K2) situées à l'intérieur.

10. Cabine de conducteur (1) selon l'une des revendications précédentes, **caractérisée en ce que** la cabine de conducteur (1) fait partie d'un tracteur de semi-remorque et le dispositif de refroidissement de moteur et/ou de groupe (K) est disposé dans un espace d'installation (B) qui est défini, dans l'axe longitudinal du véhicule (L), par le côté arrière (3) de la cabine de conducteur (1) et une ligne de pivotement (S) d'un côté avant d'une semi-remorque (10) pouvant être accouplée au tracteur de semi-remorque.

11. Cabine de conducteur (1) selon l'une des revendications précédentes, **caractérisée en ce que** des éléments de guidage du vent (4), de préférence des volets latéraux, sont disposés de préférence de manière latéralement adjacente au dispositif de refroidissement de moteur et/ou de groupe (K).

12. Cabine de conducteur (1) selon l'une des revendications précédentes, **caractérisée en ce que** le dispositif de refroidissement de moteur et/ou de groupe (K) comprend au moins un ou au moins deux circuits de refroidissement (K2, K3).

13. Cabine de conducteur (1) selon l'une des revendications précédentes, **caractérisée en ce que** le dispositif de refroidissement de moteur et/ou de groupe (K) est disposé derrière le côté arrière (3) de la cabine de conducteur (1) et est de préférence monté sur le côté arrière (3) de la cabine de conducteur (1).

14. Cabine de conducteur (1) selon l'une des revendications précédentes, **caractérisée en ce que** le côté supérieur (0) de la cabine de conducteur (1) est réalisé de manière montante et/ou est doté d'un becquet de toit et, ainsi, un espace supplémentaire est produit, lequel est utilisé par le dispositif de refroidissement de moteur et/ou de groupe (K).

15. Cabine de conducteur (1) selon l'une des revendications précédentes, **caractérisée en ce que** le côté arrière (3) de la cabine de conducteur (1) est doté d'une isolation thermique afin de découpler thermiquement l'espace intérieur de cabine de conducteur du dispositif de refroidissement de moteur et/ou de groupe (K).

16. Cabine de conducteur (1) selon l'une des revendications précédentes, **caractérisée en ce que** la cabine de conducteur (1) comprend un espace de chargement qui est accessible par le biais d'une partie du côté avant (2) de la cabine de conducteur (1).

17. Poids-lourds, de préférence tracteur de semi-remorque, comprenant une cabine de conducteur (1) selon l'une des revendications précédentes.
